# EUROPEAN PATENT SPECIFICATION

(11) **EP 2 673 318 B1**
(45) Date of publication and mention of the grant of the patent: **05.07.2017**
(21) Application number: 12704508.6
(22) Date of filing: 09.02.2012
(51) Int. Cl.: C08L 69/00

(54) **FLAME RETARDANT, THERMOPLASTIC POLYCARBONATE MOLDING COMPOSITIONS**
FLAMMHEMMENDE, THERMOPLASTISCHE POLYCARBONATFORMUNGSZUSAMMENSETZUNGEN
COMPOSITIONS DE MOULAGE DE POLYCARBONATE THERMOPLASTIQUE IGNIFUGE

(30) Priority: 11.02.2011 US 201161441766 P
(43) Date of publication of application: 18.12.2013
(73) Proprietor: Covestro Deutschland AG, 51373 Leverkusen (DE); Covestro LLC, Pittsburgh, PA 15205 (US)
(72) Inventor: MEYER, Alexander, 40489 Düsseldorf (DE); STANGE, Berit, 51379 Opladen (DE); CHUNG, James, Y. J., Wexford, Pennsylvania 15090 (US)
(74) Representative: Levpat
(86) International application number: PCT/EP2012/052187
(87) International publication number: WO 2012/107514

(56) References cited:
- EP-A1- 0 497 004
- EP-A1- 1 188 792
- DE-A1- 2 832 342
- US-A1- 2005 009 968
- DATABASE WPI Week 200403 Thomson Scientific, London, GB; AN 2004-025524 XP002675597, & JP 2003 049060 A (TEIJIN KASEI LTD) 21 February 2003 (2003-02-21) cited in the application

## Description

### BACKGROUND

### Field of the Invention

The invention relates to thermoplastic molding compositions and in particular to flame retardant polycarbonate compositions.

### Description of Related Art

Resins with flame retardant properties have a wide range of applications. Typical fields of such resins are the electronics and electrical markets, for example, housings for EE, TV and computer housings; another important application field is also the transportation sector. Here these resins are used e.g. for interior lining of trains and air planes. In addition to good flame retardant properties, these applications require that the optical, the mechanical, the impact and the thermal properties have to be maintained on a high level. This combination of properties is often not easy to obtain. By using typical flame retardant (FR) additives, the flame retardant properties of the resins can be adjusted to the desired level. However, if a high amount of FR additive is required, other properties such as optical or mechanical properties usually deteriorate.

Aromatic polycarbonates in general show satisfactorily flame retardant properties. However, they do not comply with the stringent requirements for UL rating of thin walled parts.

To overcome this deficiency, often fluorinated polymers are added to the composition. However, a major drawback of using fluorinated polymers, such as polytetrafluoroethylene (PTFE) is that optical and impact properties deteriorate significantly compared to flame retardant polycarbonates without fluorinated polymers.

Arylsiloxanes in general are well known and methods for the synthesis of polyaryloxysiloxanes are described in EP-A 0398049.

US Pat. 5334672 describes compositions using polyarylsiloxanes and polyethers, polyesters and polyimides, while compositions with polycarbonates are not disclosed.

US 6,727,302 discloses polycarbonate compositions containing silicone oils and salts leading to improved flame retardant properties in combination with good optical properties. However, since the silicone oil is liquid, its use has significant drawbacks in the industrial production of the compositions compared to a solid material.

JP 2007297447 discloses compositions containing arylalkylsilicones in combination with PTFE. These compositions are not applicable when good optical and mechanical properties in combination are needed.

JP 2003-049060 discloses polycarbonate compositions containing phenolphthalein based siloxanes as FR- additives in combination with alkaline salts. Phenolphthalein derived polymers have also been reported to have good FR-properties (example described by Lin, M. S.; Pearce, E. M. in Journal of Polymer Science, Polymer Chemistry Edition (1981), 19(9), 2151-60). However, the phenolphthalein based siloxanes are well known to degrade in a humid environment, forming strong colored species as described in Steffen, Klaus Dieter, Angewandte Makromolekulare Chemie (1972), 24 21-33. In contrast, the compositions described in the present invention are not based on phenolphthalein.

EP 1 188 792 A1 discloses a flame resistant polycarbonate resin composition comprising an aromatic polycarbonate resin, an alkali metal salt of an aromatic sulfonic acid and a silicone compound.

### SUMMARY

An objective of the present invention was to develop improved flame retardant polycarbonate compositions overcoming the aforementioned deficiencies.

It has been found in the present invention that this problem can be solved by adding specific silicones to polycarbonate compositions, wherein the silicones are effective flame retardant synergists in combination with flame retardant salts.

The combination of the silicones with the flame retardant salts resulted in polycarbonate compositions having good flame retardant properties while the required optical and impact properties are retained.

In accordance with the present invention a flame-retardant thermoplastic molding composition as defined in the claims is disclosed. The composition comprises aromatic polycarbonate resin, 0.01 to 0.8 wt.-% of a salt, wherein the salt is an alkali metal or alkaline earth metal salt of perfluoroalkane sulfonic acid, aromatic sulfimide, ar aromatic sulfonic acid, and 0.5 to 10 wt.-% of poly- and/or oligo-aryloxysiloxane (herein after referred as aryloxysiloxane) as flame-retardant synergist. The inventive composition is characterized in that its flammability rating is better than that of aromatic polycarbonate resin containing only inorganic salt of a derivative from aliphatic or aromatic sulfonic acid, sulphonamide or sulfonimide in accordance with UL-94 V standard, while mechanical and optical properties of the compositions are maintained.

### DETAILED DESCRIPTION OF A PREFERRED EMBODIMENT

In summary, compared to the compositions described in prior art, the polycarbonate compositions comprising siloxanes and flame retardant salts reported in the present invention combine the benefits of easy handling, low cost production good optical and mechanical properties as well as good flame retardant properties.

The inventive thermoplastic molding composition comprises
a) aromatic polycarbonate resin,
b) 0.01 to 0.8 wt.-% of an inorganic salt of a derivative from an aliphatic or aromatic sulfonic acid, sulfonamide or sulfonimide, and
c) 0.05 to 10 % of aryloxysiloxane of formula (1) below as flame-retardant synergist.

The inventive composition is characterized in that its flammability rating is better than that of aromatic polycarbonate resin containing only inorganic salt of a derivative from aliphatic or aromatic sulfonic acid, sulphonamide or sulfonimide in accordance with UL-94 V standard, while mechanical and optical properties of the compositions are maintained.

The amount of salt is preferably present in an amount from 0.01 wt.-% to 0.20 wt.-%, more preferred from 0.01 wt.-% to 0.15 wt.-%, and most preferred from 0.05 to 0.08 wt.-%.

The aryloxysiloxane is present from 0.05 wt.-% to 10 wt.-%, more preferred from 0.10 wt.-% to 5.00 wt.-%, even more preferred form 0.75 wt.-% to 4.00 wt.-%, and most preferred from 1.00 to 3.00 wt.-%.

The aryloxysiloxanes suitable in the context of the present invention are represented by the following substances of the formula (1): 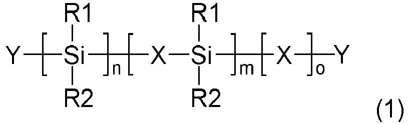 wherein
R1 and R2 stand independently for phenyl and substituted phenyl, preferably for phenyl.

Further preferred R1 and R2 are identical.

In case of substituted phenyl groups for R1 and R2 the phenyl group may be substituted with hydrogen, C1 to C18-alkyl, C1 to C18-alkoxy, Cl, Br or with phenyl or benzyl, preferably substituted by hydrogen or C1 to C12 alkyl and more preferably with hydrogen or C1 to C8 alkyl like methyl or ethyl.

In case of substituted phenyl groups, 4-methyl-, 2-methyl, or 2,4-dimethyl phenyl groups are most preferred.

X denotes bisphenolate moieties derived from hydroquinone, 4,4'-dihydroxybiphenyl (DOD), bis-(4-hydroxyphenyl)-sulfide, bis-(4-hydroxyphenyl)-ether, 2,2-bis-(4-hydroxyphenyl)propan (Bisphenol A), 2,2-bis-(4-hydroxyphenyl)-1-phenylpropane, 1,1-bis-(4-hydroxyphenyl)-1-phenylethane, 2,4- bis-(4-hydroxyphenyl)-2-methylbutane, 1,3-bis-[2-(4-hydroxyphenyl)-2propyl]benzol, 2,2-Bis-(3-methyl-4-hydroxyphenyl)-propan, bis-(3,5-dimethyl-4-hydroxyphenyl)-methane, 2,2-bis-(3,5-dimethyl-4-hydroxyphenyl)-propane and most particular for 4,4'-dihydroxybiphenyl (DOD).

Y denotes hydrogen, C1 to C9-alkoxy-, phenyloxy, alkylphenyloxy, preferably hydrogen, C1 to C4-alkoxy, phenyloxy, vinyloxy, C1-C4-alkylphenyloxy, and more preferred methoxy-, ethyloxy-, propyloxy-, butyloxy-, isobutyloxy- or phenyloxy-.

In a further embodiment the phenyloxy-moiety may be derived from substituted phenyloxy-compounds.

In an especially preferred embodiment Y denotes phenyloxy.

n is 0 or 1,
m denotes an integer, preferably from 1 to 55, more preferred from 2 to 30, and particular preferred from 3 to 20.

o is 0 or 1;
with the proviso that the molecular weight of the compound is within the limits given below.

The weight average molecular weight of formula (1) compound is 500 -100000 g/mol analyzed by GPC (gel chromatography with bisphenol-A-standard). Preferred is a molecular weight (Mw, weight-average molecular weight) of 1000-20000, and particular preferred 2000-8000 determined by gel chromatography with bisphenol A standard. Thus, m, n and o in formula (1) denote an integer and determine the above mentioned molecular weight range.

Due to the polydispersity of the compound of formula (1), it is preferred that one terminus of the chains is terminated by endgroups Y derived from C1-C4-Alkoxy, Phenyloxy, Alkylphenyloxy and the other terminus is terminated by hydrogen.

Impurities of alkyl residues that may be present in the silicone raw materials can be incorporated into the polymer without negatively affecting the invention.

The manufacturing of compounds of formula (1) is known to a person skilled in the art. The compounds of formular (1) can be obtained by the reaction of dichlorosilanes with bisphenols using amines like triethylamine as acid scavengers. This reaction is described by Liaw et al. J. Polym. Sci, Part A : Polym Chem. 1999, Vol. 37, 4591-4595. Furthermore, dianilinodiphenylsilanes can be reacted with aromatic dioles. This reaction is described by Saegusa et al. Polym Sci Part A: Polym Chem 1992, 30 , 1402 and by Curry et al. J. Appl. Polym. Sci. 1965, 9, 295.

To obtain sufficient end cap levels small amounts of aliphatic mono alcohols or aromatic mono-hydroxy compounds are added during the reaction. Preferably phenols or alkylsubstituted phenols, or aliphatic alcohols like isopropanol, propanol, ethanol or methanol are used. These compounds are used in an amount of 0.1 mol.% to 30.0 mol.%, preferably in an amount of 0.5 mol.% - 30.0 mol-% related to quantity of used dichlorsilane.

These components can be added in the beginning, within or at the end of the reaction. In a further embodiment of the invention the polysiloxane will be precipitated by using the above mentioned mono-hydroxy compounds. By this method also compounds of formular (1) can be obtained.

Suitable polycarbonate resins for preparing the compositions of the present invention are homopolycarbonates and copolycarbonates and mixtures thereof.

The polycarbonates generally have a weight average molecular weight of 10,000 to 200,000, preferably 20,000 to 80,000 (determined by GPC [gel permeation chromatography] with polycarbonate standard) and their melt flow rate, per ASTM D-1238 at 300°C, 1.2 kg, is about 1 to about 65 g/10 min., preferably about 2 to 15 g/10 min. They may be prepared, for example, by the known diphasic interface process from a carbonic acid derivative such as phosgene and dihydroxy compounds by polycondensation or by transesterification (H. Schnell, "Chemistry and Physics of Polycarbonates", Interscience Publishers, New York, New York, 1964, incorporated herein by reference).

In the present invention, dihydroxy compounds suitable for the preparation of the polycarbonates of the invention conform to the structural formulae (1) or (2). 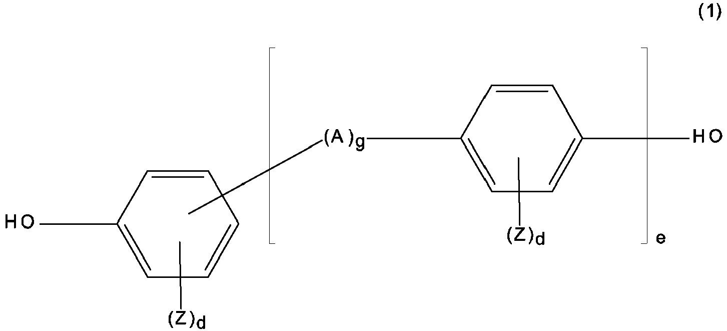 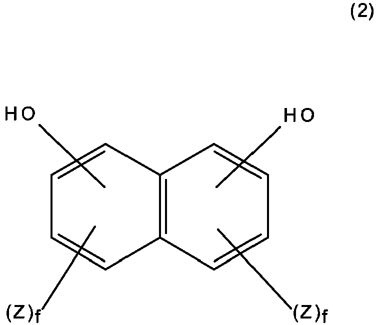 wherein
A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂ or a radical conforming to 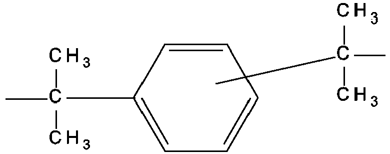 e and g both denote the number 0 to 1;
Z denotes F, Cl, Br or C₁-C₄-alkyl and if several Z radicals are substituents in one aryl radical, they may be identical or different from one another;
d denotes an integer of from 0 to 4; and
f denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxy-phenyl)-sulfoxides, bis-(hydroxyphenyl)-sulfides, bis-(hydroxyphenyl)-sulfones, and α,α-bis-(hydroxyphenyl)-diisopropylbenzenes, as well as their nuclear-alkylated compounds. These and further suitable aromatic dihydroxy compounds are described, for example, in U.S. Patents 5,105,004; 5,126,428; 5,109,076; 5,104,723; 5,086,157; 3,028,356; 2,999,835; 3,148,172; 2,991,273; 3,271,367; and 2,999,846. Further examples of suitable bisphenols are 2,2-bis-(4-hydroxy-phenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxy-phenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxy-phenyl)-sulfoxide, bis-(3,5-dimethyl-4-hydroxyphenyl)-sulfone, dihydroxy-benzophenone, 2,4-bis-(3,5-dimethyl-4-hydroxyphenyl)-cyclohexane, α,α'-bis-(3,5-dimethyl-4-hydroxyphenyl)-p-diisopropyl-benzene and 4,4'-sulfonyl diphenol.

Examples of particularly preferred aromatic bisphenols are 2,2-bis- (4-hydroxyphenyl)-propane, 2,2-bis-(3,5-dimethyl-4-hydroxyphenyl)-propane, 1,1-bis-(4-hydroxyphenyl)-cyclohexane and 1,1-bis-(4-hydroxy-phenyl)-3,3,5-trimethylcyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are phenolphthalein-based polycarbonate, copolycarbonates and terpoly-carbonates such as are described in U.S. Patents 3,036,036 and 4,210,741. The polycarbonates of the invention may also be branched by condensing therein small quantities, preferably 0.05 to 2.0 mol % (relative to the bisphenols) of polyhydroxyl compounds.

Polycarbonates of this type have been described, for example, in U.S. Patent 3,544,514. The following are some examples of polyhydroxyl compounds which may be used for this purpose: phloroglucinol; 4,6-dimethyl-2,4,6-tri-(4-hydroxy-phenyl)-heptane; 1,3,5-tri-(4-hydroxyphenyl)-benzene; 1 , 1 , 1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methyl-phenol; 2,4-dihydroxybenzoic acid; 2-(4-hydroxyphenyl)-2-(2,4-dihydroxy-phenyl)-propane and 1,4-bis-(4,4'-dihydroxytriphenylmethyl)-benzene. Some of the other polyfunctional compounds are 2,4-dihydroxy-benzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in U.S. Patents 3,028,365; 2,999,846; 3,153,008; and 2,991,273.

The preferred processes for the preparation of polycarbonates are the interfacial or melt polycondensation process.

Other methods of synthesis in forming the polycarbonates of the invention, such as disclosed in U.S. Patent 3,912,688 may be used.

A polycarbonate resin suitable in the practice of the invention is known and its structure and methods of preparation have been disclosed, for example, in U.S. Patents 3,030,331; 3,169,121; 3,395,119; 3,729,447; 4,255,556; 4,260,731; 4,369,303 and 4, 714, 746. The preferred polycarbonate resin in the present context contains in its molecular structure neither halogen nor units derived from thiodiphenol.

The inventive composition may further contain one or more conventional functional additives such as antistatic agents, antioxidants, lubricants, mold release agents, colorants, optical brighteners and UV stabilizers.

Suitable UV absorbers include hydroxybenzophenones, hydroxybenzotriazoles, hydroxybenzotriazines, cyanoacrylates, oxanilides, and benzoxazinones.

Suitable stabilizers include carbodiimides, such as bis-(2,6-diisopropylphenyl) carbodiimide and polycarbodiimides; hindered amine light stabilizers; hindered phenols (such as Irganox 1076 (CAS number 2082-79-3), Irganox 1010 (CAS number 6683-19-8); phosphites (such as Irgafos 168, CAS number 31570-04-4; Sandostab P-EPQ, CAS number 119345-01-6; Ultranox 626, CAS number 26741-53-7; Ultranox 641, CAS number 161717-32-4; Doverphos S-9228, CAS number 154862-43-8), triphenyl phosphine, and phosphorous acid.

Suitable hydrolytic stabilizers include epoxides such as Joncryl ADR-4368-F, Joncryl ADR-4368-S, Joncryl ADR-4368-L, cycloaliphatic epoxy resin ERL-4221 (CAS number 2386-87-0).

Such stabilizer additives are known in the art and are disclosed in standard reference works such as "Plastics Additives Handbook", 5th edition, edited by H. Zweifel, Hanser Publishers incorporated herein by reference.

The additives may be used in effective amounts, preferably of from 0.01 to a total of about 30.00 % relative to the total weight of the polycarbonate composition. The inventive molding composition is suitable for articles by any of the thermoplastic processes, including injection molding and extrusion.

Suitable flame retardant salts according to the present invention are alkaline metal and alekaline earth metal salts of aliphatic or aromatic sulfonic acid, aliphatic or aromatic sulfonamide or aliphatic or aromatic sulfonimide.

Preferably the flame retardant salts are selected from the group comprising sodium perfluorobutane sulfonate, potassium perfluorobutane sulfonate, sodium perfluoromethylbutane sulfonate, potassium perfluoromethylbutanesulfonate, sodium perfluoromethane sulfonate, potassium perfluoromethane sulfonate, sodium perfluoroethane sulfonate, potassium perfluoroethane sulfonate, sodium perfluoropropane sulfonate, potassium perfluoropropane sulfonate, sodium perfluorohexane sulfonate, potassium perfluorohexane sulfonate, sodium perfluoroheptane sulfonate, potassium perfluoroheptane sulfonate,sodium perfluorooctane sulfonate, potassium perfluorooctane sulfonate, tetraethylammonium perfluorobutanesulfonate and tetraethylammoniumperfluorobutanesulfonate, potassium-diphenyl-sulfone- sulfonate, sodium 2,5-dichlorobenzenesulfonate, potassium 2,5-dichlorobenzenesulfonate, sodium 2,4,5-trichlorobenzenesulfonate, potassium 2,4,5-trichlorobenzenesulfonate, sodium diphenylsulfone-sulfonate, potassium diphenylsulfone-sulfonate, sodium 2-formylbenzenesulfonate, potassium 2-formylbenzenesulfonate, sodium (N-benzenesulfonyl)-benzenesulfonamide, potassium sodium (N-benzenesulfonyl)-benzenesulfonamide, N-(p-tolylsulfonyl-)-p-toluenesulfimide-potassium salt, N-(N'-Benzylaminocarbonyl)-sulfanylimide potassium salt, and mixtures thereof.

Particular prefered are sodium perfluorobutane sulfonate, potassium perfluorobutane sulfonate, sodium perfluorooctane sulfonate, potassium perfluorooctane sulfonate, sodium diphenylsulfone-sulfonate, potassium diphenylsulfone-sulfonate, and N-(p-tolylsulfonyl-)-p-toluenesulfimide-potassium salt.

Most preferred is potassium nona-fluor-1-butane sulfonate.

### Experimental

Compositions in accordance with the invention were prepared and their properties evaluated as described below. The indicated components noted in the table, amounts noted in percent by weight, were processed conventionally and the test specimens were molded following conventional procedures and practices. The makeup of the exemplified compositions and their properties are shown in the tables below.

### Optical measurements:

Determinations of haziness and transmission were carried out according to ISO 13468. The yellowness index YI was measured according to ASTM E313.

### UL Test procedure rating criteria

The flame resistance of plastics is determined by the UL94V method (in this respect, see
a) "Test for Flammability of Plastic Materials for Parts in Devices and Appliances", S14 ff, Northbrook 1998;
b) J. Troitzsch, "International Plastics Flammability Handbook", S. 346 ff., Hanser Verlag, München 1990),
which is extensively used in the electrical/electronics field. Using this method the afterburning times and drip off behavior of ASTM standard test specimens are determined. For a flame proofed plastic material to be classified in fire classification UL94 V-0, the following criteria must be fulfilled: for a set of 5 standard ASTM test specimens (dimentions:127 x 12,7 x X, with X = thickness of the test bar, e.g. 3.0; 2.8; 2.6; 2.4 mm) all the specimens must exhibit an after burn time witch is no longer than 10 seconds after two times of flame application of 10 seconds of an open flame of defined height. The sum of the after burn times for 10 ignitions of 5 specimens must not be greater than 50 seconds. Moreover, the test specimen concerned must not exhibit burning drip off behavior, complete combustion or after glow for longer than 30 seconds. Classification UL94V1 requires that the individual after burning times are no longer than 30 seconds and that the sum of the afterburning time after 10 ignitions of 5 specimens is no greater than 250 seconds. The total after glow time must not be longer than 250 seconds. The remaining criteria are identical mentioned to above. A material is given a fire classification of UL94 V-2 if it exhibits burning drip off behavior but fulfills all other criteria of UL94 V-1.

### Rheological Properties:

Determination of MVR was carried out pursuant ASTM D1238 MVR (300 °C / 1.2 kg).

### Preparation of polydiphenylsiloxane based on dihydroxyl biphenyl containing methoxy-terminal groups.

931 g (5.0 mol) 4.4"-dihydroxybiphenyl is submitted in a boiler under nitrogen in 10 liters of absolute toluol. 1113 g (10.8 mol) of freshly distilled triethylamine dissolved in 5 liters toluol is added to this solution. The solution is heated up to 80 °C and stirred at this temperature. 1344 g (5.2 mol) diphenyldichlorsilane is dripped into the reaction mixture slowly (approximately 1 hour). The reaction mixture is stirred for approximately 12 hours at this temperature. It is then left to cool and the hydrochloride is separated by means of a suction filter. The filtrate is put into approximately 100 liters of methanol and the product precipitated. The raw product is filtered off, dried and dissolved in a mixture of dichlormethane and tetrahydrofurane (6:1). This mixture is precipitated in methanol. The precipitated product is suctioned off, rewashed with methanol and dried at 40 °C in a vacuum drying cabinet. 977 g of a white solid is obtained.
The molecular weight of the product is equal to Mw = 3,600 g/mol (GPC, using bisphenol A as standard)
In ¹H-NMR the singlet indicates the presence of methoxy-terminal groups at 3.65 ppm.

Compositions in accordance with the invention were prepared and their properties evaluated. The makeup of the exemplified compositions and their properties are shown in the tables below.

In the preparation of the compositions the following components were used:

Polycarbonate (referred to below as PC): Makrolon 2608, a bisphenol-A based homopolycarbonate, a product of Bayer Polymers, having a melt flow rate of 10 g/10 min. as determined at 300°C / 1.2 kg load in accordance with ASTM D1238.

Polycarbonate powder (referred to below as PCP): Makrolon 3108, a bisphenol-A based homopolycarbonate, a product of Bayer Polymers, having a melt flow rate of 6 g/10 min. as determined at 300°C / 1.2 kg load in accordance with ASTM D1238.

Aryloxysiloxane (referred to below in Table 1 as A) was introduced to the compositions in the form of powder.

C4 (Potassium-nona-fluor-1-butanesulfonate) is a product of Lanxess available under the trade name Bayowet ^{®} C4.

The compositions were prepared by conventional means and routine procedures that are well known in the art.

The compositions in the examples and comparative examples 1 to 3 are produced by adding 10 wt.% of a powder mixture consisting of Makrolon^{®} 3108 (PCP) powder containing the salt and component A as specified in the examples to 90 wt.% of Makrolon^{®} pellets (PC) to produce the compositions specified in the examples, wherein the amounts in wt.-% add up to 100 % and relate to the weight of the total composition. The compositions according to the present invention are compounded in a device comprising a metering unit for the components, a co-rotating twin-screw compounder (ZSK 25 from Werner & Pfleiderer) having a screw diameter of 25 mm, a perforated nozzle for extruding the melt strands, a water bath for cooling and solidifying the strands, and a pelletiser.

**Table 1**

| | 1 (control) | 2 | 3 |
|---|---|---|---|
| PC, wt.-% | 90.00 | 90.00 | 90.00 |
| PCP, wt.-% | 9.94 | 8.94 | 6.94 |
| C4, wt.-% | 0.06 | 0.06 | 0.06 |
| A, wt.-% | 0.00 | 1.00 | 3.00 |
| Impact Strength, Izod | | | |
| notched, ISO180/4a, 23°C | 81 | 83 | 82 |
| | | | |
| ΔTransmission | 0 | 0 | 1.6 |
| ΔHaze | 0 | 0 | 0 |
| ΔYellowness Index | 0 | 0.3 | 2.5 |
| | | | |
| Flame Retardance | | | |
| UL94-V @ 3.0 mm | V0 | V0 | V0 |
| UL94-V @ 2.8 mm | V2 | V1 | V0 |
| UL94-V @ 2.6 mm | V2 | V1 | V0 |
| UL94-V @ 2.4 mm | V2 | V2 | V1 |

The results shown in Table 1 demonstrate the improved flame retardancy characterizing the inventive compositions. The Δ values were calculated relative to the values of comparative example 1 (without arylsiloxane). Namely, the data generated show that compared to the compositions described in prior art without an arylsiloxane, the polycarbonate compositions comprising siloxanes and flame retardant salts reported in the present invention combine the benefits of easy handling, low cost production, good optical (transmission is 1.6 as compared to a control of 0; yellowness is 0.3 or 2.5 compared with 0 for control; and haze remains unchanged despite addition of arylsiloxane) and mechanical properties (notched, ISO180/4a at 23C is at least 1% increased over control), as well as good flame retardant properties (flame retardance measurement of V1 or V0 at UL 94-V @ 2.8mm or UL94V @ 2.6mm).

## Claims

1. A thermoplastic molding composition comprising
a) an aromatic polycarbonate resin,
b) 0.01 to 0.8 wt.-% of an inorganic salt of a derivative from an aliphatic or aromatic sulfonic acid, sulfonamide or sulfonimide,
c) 0.05 to 10 wt.-% of a poly- and/or oligo-aryloxysiloxane of formula (1) 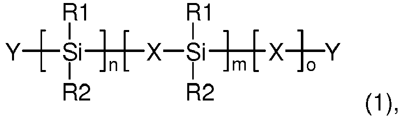 wherein
R1 and R2 stand independently for phenyl and/or substituted phenyl,
X denotes a bisphenolate moiety derived from hydroquinone, 4,4'-dihydroxybiphenyl, bis-(4-hydroxyphenyl)-sulfide, bis-(4-hydroxyphenyl)-ether, 2,2-bis-(4-hydroxyphenyl)propan, 2,2-bis-(4-hydroxyphenyl)-1-phenylpropane, 1,1-bis-(4-hydroxyphenyl)-1-phenylethane, 2,4- bis-(4-hydroxyphenyl)-2-methylbutane, 1,3-bis-[2-(4-hydroxyphenyl)-2propyl]benzol, 2,2-Bis-(3-methyl-4-hydroxyphenyl)-propan, bis-(3,5-dimethyl-4-hydroxyphenyl)-methane, 2,2-bis-(3,5-dimethyl-4-hydroxyphenyl)-propane,
Y denotes hydrogen, C₁-C₉-alkoxy-, phenyloxy-, vinyloxy- and alkylphenyloxy,
n is 0 or 1,
m denotes an integer,
o is for 0 or 1,
and the weight average molecular weight, as analyzed by gel permeation chromatography with bisphenol-A-standard, of said aryloxysiloxane of formula (1) is from 500 to 100000 g/mol,
and wherein all % are relative to the weight of the composition.

2. A composition according to claim 1, wherein R1 and R2 of formula (1) are phenyl.

3. A composition according to claim 1 or 2, wherein the X in formula (1) denotes a 4,4'-dihydroxybiphenyl moiety.

4. A composition according to claim 1 or 2, wherein X denotes a 4,4'-dihydroxydiphenyl moiety and Y denotes phenyloxy and n=1 and o=1 and m is from 1 to 55.

5. A composition according to claim 4, wherein in formula (1), a first Y denotes phenyloxy and another Y denotes hydrogen.

6. A composition according to claim 1, wherein the poly- and/or oligo-aryloxysiloxane of formula (1) is present in an amount of 0.10 to 5.00 wt.-%.

7. A composition according to claim 1, wherein the poly- and/or oligo-aryloxysiloxane of formula (1) is present in an amount of 1.00 to 3.00 wt.-%.

8. A composition according to claim 1, wherein the salt (b) is present in an amount of 0.01 to 0.15 wt.-%.

9. A composition according to claim 1, wherein the salt (b) is present in an amount of 0.05 to 0.10 wt.-%.

10. A composition according to claim 1, wherein the weight average molecular weight of component c) is from 1000 to 20000 g/mol.

11. A composition according to claim 1, wherein the poly- and/or oligo-aryloxysiloxane of formula (1) has at least one end group selected from the group consisting of phenyloxy, alkylphenyloxy, methyloxy, ethyloxy and propyloxy radicals.

12. A composition according to claim 1, wherein the salt (b) is at least one member selected from the group consisting of sodium perfluorobutane sulfonate, potassium perfluorobutane sulfonate, sodium perfluoromethylbutane sulfonate, potassium perfluoromethylbutanesulfonate, sodium perfluoromethane sulfonate, potassium perfluoromethane sulfonate, sodium perfluoroethane sulfonate, potassium perfluoroethane sulfonate, sodium perfluoropropane sulfonate, potassium perfluoropropane sulfonate, sodium perfluorohexane sulfonate, potassium perfluorohexane sulfonate, sodium perfluoroheptane sulfonate, potassium perfluoroheptane sulfonate, tetraethylammonium perfluorobutanesulfonate and tetraethylammoniumperfluorobutanesulfonate and potassium diphenyl sulfone sulfonate.

13. A composition according to claim 1, wherein the salt (b) is potassium nona-fluor-1-butane sulfonate.

14. An article of manufacture comprising the composition according to claim 1.

## Patentansprüche

1. Thermoplastische Formmasse, enthaltend
a) ein aromatisches Polycarbonatharz,
b) 0,01 bis 0,8 Gew.-% eines anorganischen Salzes eines Derivats einer aliphatischen oder aromatischen Sulfonsäure oder eines aliphatischen oder aromatischen Sulfonamids oder Sulfonimids,
c) 0,05 bis 10 Gew.-% eines Poly- und/oder Oligoaryloxysiloxans der Formel (1) 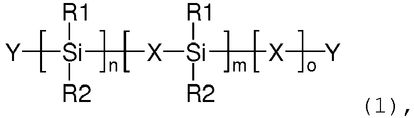 worin
R1 und R2 unabhängig voneinander für Phenyl und/oder substituiertes Phenyl stehen,
X für eine Bisphenolatgruppierung steht, die sich von Hydrochinon, 4,4'-Dihydroxybiphenyl, Bis(4-hydroxyphenyl)sulfid, Bis(4-hydroxyphenyl)ether, 2,2-Bis(4-hydroxyphenyl)propan, 2,2-Bis(4-hydroxyphenyl)-1-phenylpropan, 1,1-Bis(4-hydroxyphenyl)-1-phenylethan, 2,4-Bis-(4-hydroxyphenyl)-2-methylbutan, 1,3-Bis[2-(4-hydroxyphenyl)-2-propyl]benzol, 2,2-Bis(3-methyl-4-hydroxyphenyl)propan, Bis(3,5-dimethyl-4-hydroxyphenyl)methan, 2,2-Bis(3,5-dimethyl-4-hydroxyphenyl)propan ableitet,
Y Wasserstoff, C₁-C₉-Alkoxy-, Phenyloxy-, Vinyloxy- und Alkylphenyloxy bedeutet,
n für 0 oder 1 steht,
m eine ganze Zahl bedeutet,
o für 0 oder 1 steht,
und das gewichtsmittlere Molekulargewicht des Aryloxysiloxans der Formel (1) gemäß Analyse durch Gelpermeationschromatographie mit Bisphenol-A-Standard 500 bis 100.000 g/mol beträgt,
und wobei sich alle %-Angaben auf das Gewicht der Masse beziehen.

2. Masse nach Anspruch 1, wobei R1 und R2 von Formel (1) für Phenyl stehen.

3. Masse nach Anspruch 1 oder 2, wobei X in Formel (1) eine 4,4'-Dihydroxybiphenylgruppierung bedeutet.

4. Masse nach Anspruch 1 oder 2, wobei X eine 4,4'-Dihydroxybiphenylgruppierung bedeutet und Y Phenyloxy bedeutet und n = 1 und o = 1 und m für 1 bis 55 steht.

5. Masse nach Anspruch 4, wobei in Formel (1) ein erstes Y Phenyloxy bedeutet und ein anderes Y Wasserstoff bedeutet.

6. Masse nach Anspruch 1, wobei das Poly- und/oder Oligoaryloxysiloxan der Formel (1) in einer Menge von 0,10 bis 5,00 Gew.-% vorliegt.

7. Masse nach Anspruch 1, wobei das Poly- und/oder Oligoaryloxysiloxan der Formel (1) in einer Menge von 1,00 bis 3,00 Gew.-% vorliegt.

8. Masse nach Anspruch 1, wobei das Salz (b) in einer Menge von 0,01 bis 0,15 Gew.-% vorliegt.

9. Masse nach Anspruch 1, wobei das Salz (b) in einer Menge von 0,05 bis 0,10 Gew.-% vorliegt.

10. Masse nach Anspruch 1, wobei das gewichtsmittlere Molekulargewicht von Komponente c) 1000 bis 20.000 g/mol beträgt.

11. Masse nach Anspruch 1, wobei das Poly- und/oder Oligoaryloxysiloxan der Formel (1) mindestens eine Endgruppe aus der Gruppe bestehend aus Phenyloxy-, Alkylphenyloxy-, Methyloxy-, Ethyloxy- und Propyloxyresten aufweist.

12. Masse nach Anspruch 1, wobei es sich bei dem Salz (b) um mindestens ein Mitglied aus der Gruppe bestehend aus Natriumperfluorbutansulfonat, Kaliumperfluorbutansulfonat, Natriumperfluormethylbutansulfonat, Kaliumperfluormethylbutansulfonat, Natriumperfluormethansulfonat, Kaliumperfluormethansulfonat, Natriumperfluorethansulfonat, Kaliumperfluorethansulfonat, Natriumperfluorpropansulfonat, Kaliumperfluorpropansulfonat, Natriumperfluorhexansulfonat, Kaliumperfluorhexansulfonat, Natriumperfluorheptansulfonat, Kaliumperfluorheptansulfonat, Tetraethylammoniumperfluorbutansulfonat und Tetraethylammoniumperfluorbutansulfonat und Kaliumdiphenylsulfonsulfonat handelt.

13. Masse nach Anspruch 1, wobei es sich bei dem Salz (b) um Kaliumnonafluor-1-butansulfonat handelt.

14. Erzeugnis, umfassend die Masse nach Anspruch 1.

## Revendications

1. Composition de moulage thermoplastique comprenant :
a) une résine de polycarbonate aromatique,
b) 0,01 à 0,8 % en poids d'un sel inorganique d'un dérivé d'un acide sulfonique, sulfonamide ou sulfonimide aliphatique ou aromatique,
c) 0,05 à 10 % en poids d'un poly- et/ou oligo-aryloxysiloxane ayant la formule (1) 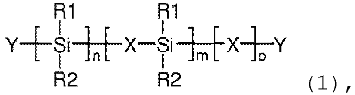 dans laquelle
R1 et R2 représentent indépendamment un groupe phényle et/ou phényle substitué,
X représente une fraction bisphénolate dérivée d'hydroquinone, de 4,4'-dihydroxybiphényle, de sulfure de bis-(4-hydroxyphényle), de bis-(4-hydroxyphényl)-éther, de 2,2-bis-(4-hydroxyphényl)propane, de 2,2-bis-(4-hydroxyphényl)-1-phénylpropane, de 1,1-bis-(4-hydroxyphényl)-1-phényléthane, de 2,4-bis-(4-hydroxyphényl)-2-méthylbutane, de 1,3-bis-[2-(4-hydroxyphényl)-2-propyl]benzole, de 2,2-bis-(3-méthyl-4-hydroxyphényl)-propane, de bis-(3,5-diméthyl-4-hydroxyphényl)-méthane, de 2,2-bis-(3,5-diméthyl-4-hydroxyphényl)-propane,
Y représente un atome d'hydrogène ou un groupe alcoxy, phényloxy, vinyloxy ou alkylphényloxy C₁-C₉,
n vaut 0 ou 1,
m représente un nombre entier,
o vaut 0 ou 1,
et la masse moléculaire moyenne en poids, telle qu'analysée par chromatographie par perméation de gel en utilisant un étalon en bisphénol A, dudit aryloxysiloxane ayant la formule (1), est de 500 à 100 000 g/mol,
et dans laquelle tous les pourcentages sont exprimés relativement au poids de la composition.

2. Composition selon la revendication 1, dans laquelle R1 et R2, dans la formule (1), sont un groupe phényle.

3. Composition selon la revendication 1 ou 2, dans laquelle X, dans la formule (1), représente une fraction 4,4'-dihydroxybiphényle.

4. Composition selon la revendication 1 ou 2, dans laquelle X représente une fraction 4,4'-dihydroxydiphényle et Y représente un groupe phényloxy, et n vaut 1, et o vaut 1, et m vaut de 1 à 55.

5. Composition selon la revendication 4, dans laquelle, dans la formule (1), un premier groupe Y représente un groupe phényloxy et un autre groupe Y représente un atome d'hydrogène.

6. Composition selon la revendication 1, dans laquelle le poly- et/ou l'oligoaryloxysiloxane ayant la formule (1) est présent dans une quantité de 0,10 à 5,00 % en poids.

7. Composition selon la revendication 1, dans laquelle le poly- et/ou l'oligoaryloxysiloxane ayant la formule (1) est présent dans une quantité de 1,00 à 3,00 % en poids.

8. Composition selon la revendication 1, dans laquelle le sel (b) est présent dans une quantité de 0,01 à 0,15 % en poids.

9. Composition selon la revendication 1, dans laquelle le sel (b) est présent dans une quantité de 0,05 à 0,10 % en poids.

10. Composition selon la revendication 1, dans laquelle la masse moléculaire moyenne en poids du composant (c) est de 1 000 à 20 000 g/mol.

11. Composition selon la revendication 1, dans laquelle le poly et/ou l'oligoaryloxysiloxane ayant la formule (1) comporte au moins un groupe d'extrémité sélectionné dans le groupe constitué de radicaux phényloxy, alkylphényloxy, méthyloxy, éthyloxy et propyloxy.

12. Composition selon la revendication 1, dans laquelle le sel (b) est au moins un élément sélectionné dans le groupe constitué du perfluorobutanesulfonate de sodium, du perfluorobutanesulfonate de potassium, du perfluorométhylbutanesulfonate de sodium, du perfluorométhylbutanesulfonate de potassium, du perfluorométhanesulfonate de sodium, du perfluorométhanesulfonate de potassium, du perfluoroéthanesulfonate de sodium, du perfluoroéthanesulfonate de potassium, du perfluoropropanesulfonate de sodium, du perfluoropropanesulfonate de potassium, du perfluorohexanesulfonate de sodium, du perfluorohexanesulfonate de potassium, du perfluoroheptanesulfonate de sodium, du perfluoroheptanesulfonate de potassium, du perfluorobutanesulfonate de tétraéthylammonium, et du perfluorobutanesulfonate de tétraéthylammonium et du diphénylsulfonesulfonate de potassium.

13. Composition selon la revendication 1, dans laquelle le sel (b) est le nonafluor-1-butanesulfonate de potassium.

14. Produit manufacturé comprenant la composition selon la revendication 1.
